# EUROPEAN PATENT APPLICATION

(11) **EP 2 586 734 A1**
(43) Date of publication of application: **01.05.2013**
(21) Application number: 12460059.4
(22) Date of filing: 05.09.2012
(51) Int. Cl.: B65G 47/96

(54) **Carrier for sorting fruits or vegetables**

(30) Priority: 24.10.2011 PL 39673911
(71) Applicant: Sorter S.C., 26-600 Radom (PL)
(72) Inventor: Grzeszczyk, Konrad, 26-600 Radom (PL); Ziomek, Michal, 26-616 Radom (PL)

(57) **Abstract**

A bucket-roller assembly for transferring and sorting fruits or vegetables comprising a housing (1), a roller (2), a bucket (5), a lifting arm (4) and a lever (6) for tilting the bucket (5) crosswise to the transport direction. The lifting arm (4) is pivotally connected to the housing by two connectors (7, 8). The bucket (5) is pivotally connected to the lifting arm (4) and a torsion spring (10) is provided for returning the bucket (5) to its initial position. The lever (6) is pivotally connected to the lifting arm (4) and when the lifting arm (4) is lifted upwards, the lever (6) will abut against the upper limiter (14), pivot about its axis and tilt the bucket (5).

## Description

### Invention description:

The subject of the invention is a moveable transferring-feeding bucket assembly featuring a rubber rotational roller fixed to conveying chain of a sorting machine alongside the transporting line, and applied mainly in electronic sorting devices in fruit and vegetable industry. The device is used to conveying and sorting fruit and vegetables having circular or elliptic section, hereinafter called products, which during transferring are automatically checked according to at least a single criterion.

The aim of the invention was to ensure more efficient conveying of a rotating product to the sorting zone, and then distributing sorted products to the corresponding collecting track of a sorting device following applied sorting criteria. Product rotating is essential and required for correct determining its dimensions by the cameras of used visual system, which evaluates the size, dyeing, colour or any damage.

An important aspect of the invention, valid for the performance of the sorting device, is the speed of carrying out product dimension determining and sorting processes. The sorting speed is related to the compact design of the transferring-feeding bucket assembly and the rotational roller, where one running meter of the conveying chain can feature large number of bucket assemblies (distance between the buckets: 100 mm).

Another aspect of the invention is minimizing the source of device's constant contamination or dirt accumulating on a product during sorting process, which is solved by invention's design, and in particular the design of the transferring-feeding bucket. The invention ensures small contact area between the arms of the transferring-feeding buckets and transported product.

According to the invention, the transferring-feeding bucket assembly with a rotational roller is dedicated to dislocating the product placed in a transferring-feeding bucket, while the product is rotated by a rotational roller located in the frontal section of the assembly. The transferring-feeding bucket assembly with a rotational roller is used to separate the products according to applied sorting criteria.

Depending on a valid criterion the sorted product is allocated to a corresponding collecting input of device's sorting track. After product sorting, and matching of the transferring-feeding bucket assembly and the product, and when located at a corresponding collecting track, the bucket is automatically tilted crosswise to the transport direction. The product is fed to a corresponding collecting output of the sorting device, according to the criterion valid for the product.

The patent literature does not mention solutions on instruments forming part of a sorting device and designed particularly to transport and sort fruit or vegetables having circular or elliptic section. The subject of the invention is explained in more details on the embodiment visualized on the drawings, where: Fig.1 presents the transferring-feeding bucket with a rotating roller in an general isometric view, Fig. 2 presents a module of a transferring-feeding bucket with a rotating roller on a side view. Fig. 3 - presents technical details of the transferring-feeding bucket elements (5) with a side projection.

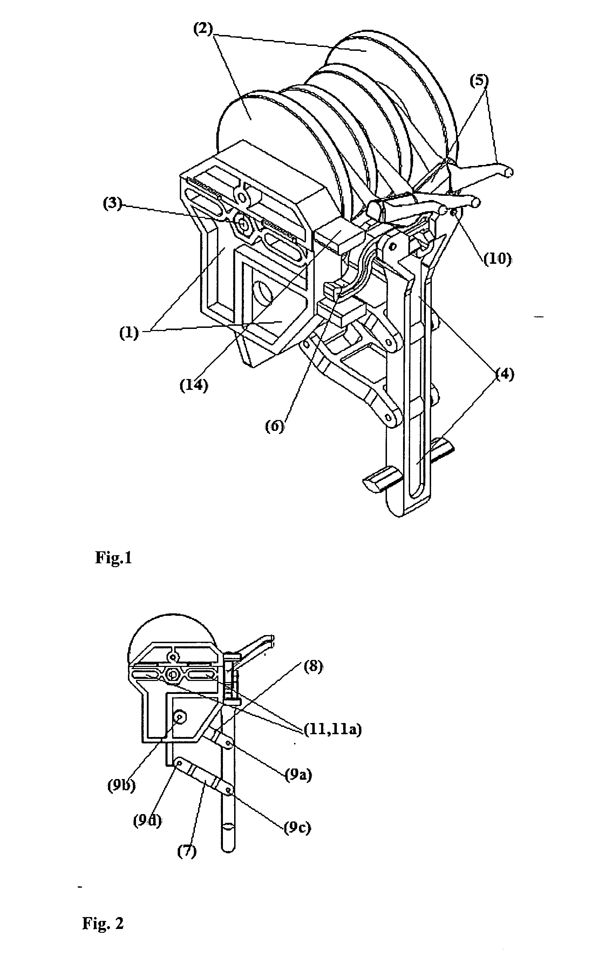

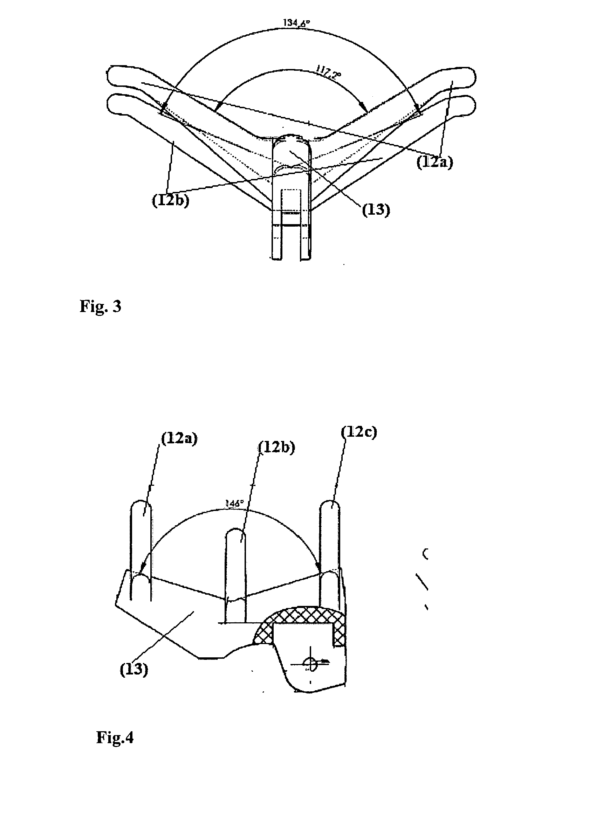

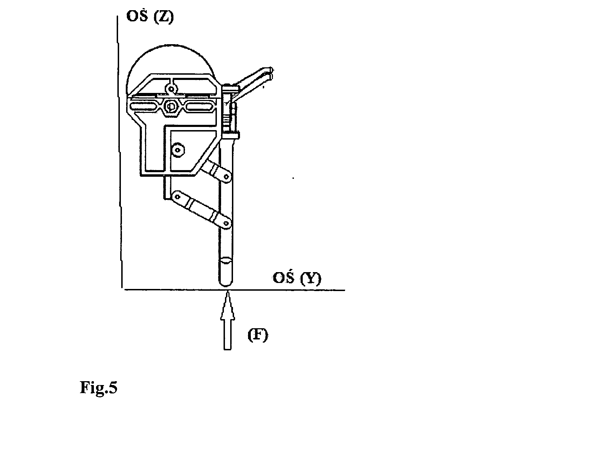

Fig. 4 demonstrates the joining arm of the transferring-feeding bucket. Fig 5 presents the direction of force (F), which acts on the hanger of the transferring-feeding bucket. As demonstrated on Fig.1,2,3,4,5 the assembly of a transferring-feeding bucket with a rotating roller, as specified in the invention, comprises a carrying housing (1), to which a rubber rotating roller is attached (2) - with a sliding bearing, mounted on a steel pin (3) and turned by a passive or active guide and a moveable hanger (4) featuring a feeding bucket (5) activated by a lever (6) .

By the action of the force (F) onto the hanger (4) the lever (6) is lifted upwards and rests on the upper limiter (14) which is a part of the carrying housing (1). Lever (6) resting on the limiter (14) causes bucket (5) tilting crosswise to the transport direction, and hence its bending out in relation to the fixation point and feeding the product to a corresponding collecting output of the sorting machine.

Between the hanger (4), and the feeding bucket (5) there is a torsion spring (10) which is designed to generate force required to returning of the feeding bucket (5) to its initial position. The feeding bucket (5) is assembled on a connecting arm (13) and in a moveable way to the hanger (4) on its right side using a pin featuring a torsion spring (10).

In the upper section of the carrying housing (1) there are lengthwise bean shaped openings (11 and 11a), which are used to fixing the transferring-feeding bucket assembly to the conveying chain of the sorting machine. The hanger (4) is attached to the carrying body (1) in a self-aligning way, and with use of two connectors (7 and 8).

The moveable elements, i.e. the feeding bucket (5), the connectors (7 and 8), the lever (6) fixed to the hanger (4) using steel pegs ( 9a, 9b, 9c, 9d), are made of plastics. Additionally, on the entire mounting surface to the conveying chain of the sorting machine, the carrying housing (1) features an undercutting facilitating its correct assembly.

The feeding bucket (5) features a goblet-shaped seating comprising three stationary elements (12a, 12b, 12c), which are so called holders, joined by a connecting arm (13), which are designed to carry the product from the bottom. Each of the stationary elements, feeding bucket (5) holders (12a,12b,12c) is shaped similarly to letter "V" and features different tilting angle of its arms. Two extreme stationary elements (12a and 12c) of the feeding bucket (5) are tilted by 117 degrees, and the titling angle of the single and middle stationary element (12b) is set to 135 degrees.

Most frequently, the feeding bucket (5) is made of three stationary elements, the holders (12a, 12b, 12c) which are joined from their bottom side by a connecting arm (13) which is also a "V" shaped part with the tilt angle of the arms set to 145 degrees.

## Claims

1. An assembly of a transferring-feeding bucket featuring a rotational roller (2) dedicated especially for transferring and sorting fruit or vegetables having circular or elliptic section with a characteristic feature that the carrying housing (1) with an attached rubber rotational roller (2) has a sliding bearing, and that the roller is seated on a steel pin (3), and there is a moveable hanger (4) with a a moveable feeding bucket (5) set in motion by a lever (6) which is put in motion by force (F) acting on the hanger (4), as a result of which the lever is lifted upwards until resting on upper limiter (14) which is a part of the carrying housing (1). The force causes tilting of the feeding bucket (5) crosswise to the product transport direction, and thus feeding bucket (5) tilting in relation to its attachment point, thus causing feeding of the transported product to a corresponding collecting output of a sorting machine.

2. An assembly of a transferring-feeding bucket featuring a rotational roller (2) as specified in Claim 1, is distinguished by a feature that between a hanger (4) and the feeding bucket (5) there is a torsion spring assembled (10) which is designed to generate force required to returning of the feeding bucket (5) to its initial position from the tilt.

3. An assembly of a transferring-feeding bucket featuring a rotational roller (2) as specified in Claims 1-2 wherein the feeding bucket (5) is attached to a hanger (4) by a connecting arm (4) on its right side using a pin featuring a torsion spring (10) and in a moveable way.

4. An assembly of a transferring-feeding bucket featuring a rotational roller (2) as specified in Claims 1 - 3 wherein the hanger (4) is fixed to the carrying housing (1) in a self-aligning way with use of two connectors (7 and 8).

5. An assembly of a transferring-feeding bucket featuring a rotational roller (2) as specified in Claims 1 - 4 wherein the all moveable elements of the transferring-feeding bucket featuring a rotational roller module (2), i.e. the feeding bucket (5), the connectors (7 and 8), and the lever (6) are joined to the hanger (4) with use of steel pegs (9a, 9b, 9c, 9d).

6. An assembly of a transferring-feeding bucket featuring a rotational roller (2) as specified in Claims from 1 to 5, wherein, the feeding bucket (5) features a goblet-shaped seating most frequently comprising three stationary elements (12a, 12b, 12c), which shape is similar to letter "V" and which feature different tilting angle of its arms.

7. An assembly of a transferring-feeding bucket featuring a rotational roller (2) as specified in Claim 6, wherein the two extreme stationary elements (12a and 12c) of the feeding bucket (5) usually have the same tilting angle set to 117 degrees, while the tilting angle of the arms of the middle stationary element (12b) of the feeding bucket (5) is usually set to 135 degrees.

8. An assembly of a transferring-feeding bucket featuring a rotational roller (2) as specified in Claims 6 and 7, wherein the feeding bucket (5) is usually made of three stationary elements (12a, 12b, 12c) joined in a permanent way from the bottom by a connecting arm (13) which is also a "V" shaped part, and where the tilting angle of the arms is most frequently set to 145 degrees.
